# EUROPÄISCHE PATENTSCHRIFT

(11) **EP 3 056 426 B1**
(45) Veröffentlichungstag und Bekanntmachung des Hinweises auf die Patenterteilung: **09.01.2019**
(21) Anmeldenummer: 15000418.2
(22) Anmeldetag: 12.02.2015
(51) Int. Cl.: B64C 39/02

(54) **Ultraleichtflugzeug**
Ultralight aircraft
Avion ultraléger

(43) Veröffentlichungstag der Anmeldung: 17.08.2016
(73) Patentinhaber: Airbus Defence and Space GmbH, 85521 Ottobrunn (DE)
(72) Erfinder: Burns, Simon, 80935 München (DE)

(56) Entgegenhaltungen:
- DE-T2- 60 124 224
- FR-A1- 2 856 378

## Beschreibung

Die vorliegende Erfindung betrifft ein Ultraleichtflugzeug für große Flughöhen.

Für viele Anwendungen ist es wünschenswert, ein Fluggerät zur Verfügung zu haben, welches lange in der Luft bleiben kann und in großen Flughöhen fliegen kann. Ferner wird für bestimmte Einsatzzwecke ein Fluggerät benötigt, welches im Fall eines strukturellen Zusammenbruchs des Fluggeräts und eines damit verbundenen Absturzes mit einer möglichst geringen Schadenseinwirkung sicher auf den Boden gebracht werden kann.

Beispielsweise werden Fluggeräte zur Luftüberwachung und - aufklärung eingesetzt, welche in sehr großen Höhen fliegen und sehr lange Flugzeiten aufweisen und dabei beispielsweise Luftbilder aufnehmen können sollen In einer alternativen Anwendung kann ein Ultraleichtflugzeug auch als Höhenplattform bezeichnet werden. Eine Höhenplattform kann zur Überwachung (Verkehr, Veranstaltung, Wetter) oder bei entsprechender Höhe sogar für Mobilfunk ohne die von Satelliten bekannte Verzögerung eingesetzt werden.

Für solche Einsätze werden unter anderem Fluggeräte entwickelt, die sehr lange Flugzeiten aufweisen und in großen Flughöhen operieren können. Für die Energieversorgung werden meist Solarzellen verwendet, die auf den Tragflächen angebracht sind. Derartige Fluggeräte werden meist unbemannt betrieben und können dementsprechend groß sein. Teilweise werden diese Fluggeräte auch als Drohnen bezeichnet. Derartige Fluggeräte sind meist Filigran bzw. leicht gebaut und können bei starken Luftturbulenzen beschädigt werden, was im Extremfall zum Verlust der Flugeigenschaften führen kann, so dass das Fluggerät abstürzt oder einzelne Komponenten sich von dem Fluggerät lösen können und herunterfallen können.

DE 601 24 224 T2 und FR 2 856 378 A1 offenbaren derartige Fluggeräte nach dem Oberbegriff des Anspruchs 1. Davon ausgehend ist es Aufgabe der Erfindung, ein Fluggerät bereitzustellen, das sowohl gute Flugeigenschaften in großer Höhe aufweist als auch keine Gefahr für die Umgebung darstellt.

Diese Aufgabe wird mit einem Fluggerät mit den Merkmalen des Anspruchs 1 gelöst. Beispielhafte Ausführungsformen sind in den abhängigen Ansprüchen sowie der nachfolgenden Beschreibung dargestellt.

Es wird ein Fluggerät vorgeschlagen, das eine Tragestruktur, eine Flügelstruktur und wenigstens eine Antriebsvorrichtung aufweist. Die Tragestruktur weist mindestens einen Rumpf auf. Die Antriebsvorrichtung weist mindestens einen Propeller und einen Antriebsmotor auf. Das Fluggerät weist mindestens einen Energiespeicher zum Bereitstellen von Energie für den Betrieb der Antriebsvorrichtung auf. Die mindestens eine Antriebsvorrichtung und der mindestens eine Energiespeicher sind mittels einer Sicherungseinrichtung mechanisch mit der Tragestruktur und der Flügelstruktur des Fluggeräts verbunden.

Der Erfindung liegt der Gedanke zugrunde, die einzelnen Komponenten des Fluggeräts zusätzlich zu der eigentlichen Befestigung der Komponenten mit einer zusätzlichen Sicherungseinrichtung mechanisch untereinander zu verbinden. Die einzelnen Komponenten des Fluggeräts, wie Tragestruktur, Flügelstruktur, Antriebsvorrichtung und Energiespeicher sind untereinander mit der zusätzlichen Sicherungseinrichtung verbunden. Die Antriebsvorrichtung und der Energiespeicher weisen meist ein im Vergleich zu der restlichen Struktur des Fluggeräts hohes Gewicht auf. Lösen sich diese Komponenten vom restlichen Fluggerät können diese beim freien Fall aus sehr großen Höhen eine hohe Fallgeschwindigkeit erreichen und einen nicht unerheblichen Schaden beim Aufprall auf dem Erdboden verursachen. Um bei einem Lösen der eigentlichen mechanischen Befestigung dieser Komponenten am Fluggerät, d.h. an der eigentlichen Tragestruktur und/oder der Flügelstruktur des Fluggeräts, ein Loslösen von der restlichen Struktur des Fluggeräts zu vermeiden, sind die meisten Komponenten des Fluggeräts untereinander mit einer zusätzlichen mechanischen Sicherungseinrichtung verbunden.

Die Tragfläche bzw. die Tragflächen der Flügelstruktur sind dabei vorzugsweise derart dimensioniert, dass sie bei von dem Fluggerät zu erzielenden Reisefluggeschwindigkeiten alleine für einen ausreichenden Auftrieb für das Fluggerät sorgen können. Insbesondere kann an der Tragfläche ein Leitwerk oder Ruder angeordnet sein. Das vorgeschlagene Fluggerät soll eine Tragestruktur und eine Flügelstruktur aufweisen. Die Tragestruktur soll dabei für eine strukturelle Festigkeit des Fluggeräts sorgen, so dass sowohl die Flügelstruktur als auch die Antriebsvorrichtung und die Energiespeicher stabil an dem Fluggerät befestigt werden können. Die Flügelstruktur soll mithilfe von geeignet ausgebildeten Tragflächen für einen dynamischen Auftrieb sorgen können.

Es wird darauf hingewiesen, dass die Tatsache, dass für die Tragestruktur und die Flügelstruktur zwei separate Begriffe verwendet werden, nicht bedeutet, dass die von der Tragestruktur und der Flügelstruktur zu bewirkenden Funktionen zwingend von separaten realen Strukturen bewirkt werden müssen. Beispielsweise können Funktionen der Tragestruktur und Funktionen der Flügelstruktur von unterschiedlichen Strukturkomponenten des vorgeschlagenen Fluggeräts oder aber auch von gleichen Strukturkomponenten des Fluggeräts bewirkt werden. Als Beispiel kann ein Flügel eines Fluggeräts gleichzeitig als einen dynamischen Auftrieb bewirkende Tragfläche und somit als Teil einer Flügelstruktur wirken als auch andere Komponenten des Fluggeräts mechanisch miteinander verbinden und somit als Teil einer Tragestruktur wirken. Beispielsweise kann der Flügel eine äußere Haut aufweisen, die ein Profil einer dadurch gebildeten Tragfläche vorgibt und somit Teil der Flügelstruktur ist. Gleichzeitig kann der Flügel innen liegende Komponenten wie beispielsweise Verstrebungen aufweisen, die für eine mechanische Festigkeit sorgen und an denen beispielsweise die Flügelhaut befestigt ist, so dass diese als Tragestruktur dienen können.

Die einzelnen Komponenten des vorgeschlagenen Fluggeräts können dabei verhältnismäßig einfach ausgebildet sein und gesteuert werden.

Gemäß einer Ausführungsform sind die mindestens eine Antriebsvorrichtung, der mindestens eine Energiespeicher, die Tragestruktur und/oder die Flügelstruktur des Fluggeräts mittels der Sicherungseinrichtung untereinander verbunden. Um ein Loslösen der relativen schweren Komponenten des Fluggeräts, wie beispielsweise der Antriebsvorrichtung und des Energiespeichers, von der Tragestruktur und/oder der Flügelstruktur zu vermeiden, sind die Antriebsvorrichtung und der Energiespeicher über die Sicherungseinrichtung untereinander und mit der Tragestruktur und/oder der Flügelstruktur mechanisch verbunden. Durch die mechanische Schutzeinrichtung werden die Komponenten des Fluggeräts zusammen gehalten. Insbesondere werden die einzelnen Komponenten des Fluggeräts durch die zusätzliche Sicherungseinrichtung zusammengehalten auch wenn sich die eigentliche Befestigung der Komponenten am Fluggerät selbst gelöst hat oder beschädigt ist.

Gemäß einer Ausführungsform ist die Antriebsvorrichtung zumindest teilweise von einer Sicherungshülle umhüllt. Die die Antriebsvorrichtung zumindest teilweise umhüllende Sicherungshülle bzw. Schutzhülle sorgt dafür, dass die Bauteile aus denen die Antriebsvorrichtung besteht bei einer Beschädigung zusammengehalten werden können. Darüber hinaus bildet die Sicherungshülle zumindest teilweise einen mechanischen Schutz für die Antriebsvorrichtung.

Gemäß einer Ausführungsform ist der Energiespeicher zumindest teilweise von einer Sicherungshülle bzw. Schutzhülle umhüllt. Die den Energiespeicher zumindest teilweise umhüllende Sicherungshülle sorgt dafür, dass die Bauteile aus denen der Energiespeicher besteht bei einer Beschädigung zusammengehalten werden können. Darüber hinaus bildet die Sicherungshülle zumindest teilweise einen mechanischen Schutz für den Energiespeicher.

Gemäß einer Ausführungsform ist die Sicherungshülle mit der Sicherungseinrichtung mechanisch verbunden. Um eine sichere mechanische Verbindung der einzelnen Komponenten, insbesondere der Antriebsvorrichtung und des Energiespeichers zu gewährleisten, ist die jeweilige Sicherungshülle mit der Sicherungseinrichtung mechanisch verbunden. Die Sicherungshülle bzw. Schutzhülle umgibt die Antriebsvorrichtung und den Energiespeicher, wobei die Schutzeinrichtung mit der Sicherungshülle mechanisch verbunden ist.

Gemäß einer Ausführungsform ist die Sicherungshülle ein Netz oder Gewebe. Das Netz oder das Gewebe umhüllt die Antriebsvorrichtung bzw. den Energiespeicher und bietet so einen Schutz vor dem Herauslösen von Bauteilen der Antriebsvorrichtung bzw. des Energiespeichers bei einer Beschädigung.

Gemäß einer Ausführungsform besteht die Sicherungshülle aus einer hochreisfesten Faser oder Faserverbund. Bevorzugt besteht die Faser aus einer ultraleichten, jedoch hochreisfesten Faser oder Faserverbund. Die Sicherungshülle bzw. Schutzhülle bietet hierdurch einen Schutz, wobei gleichzeitig das Gewicht der Sicherungshülle gering gehalten werden kann. Vorzugsweise besteht die Faser oder der Faserverbund aus einem Material das insbesondere UV-resistent ist. Vorzugsweise ist das Material auch unempfindlich gegen extrem kalte Temperaturen von ca. -90 °C, wie sie beispielsweise in großen Höhen, in denen HAPS beispielsweise fliegen vorkommen. Beispielsweise besteht die Sicherungshülle aus einem Polyamid, beispielsweise Nylon oder einer Faser oder einem Faserverbund mit vergleichbaren Eigenschaften.

Gemäß einer Ausführungsform weist die Sicherungseinrichtung mindesteins ein Seil, einen Gurt und/oder ein Kabel auf. Die Sicherungseinrichtung kann beispielsweise ein Seil sein, das die Antriebsvorrichtung und den Energiespeicher untereinander und mit der Tragestruktur und/oder der Flügelstruktur des Fluggeräts verbindet. Beispielsweise ist das Seil, der Gurt oder das Kabel mechanisch mit der Antriebsvorrichtung bzw. dem Energiespeicher mechanisch verbunden. Beispielsweise ist das Seil mittels einer Öse oder dergleichen an der Antriebsvorrichtung bzw. dem Energiespeicher befestigt. Alternativ ist das Seil so um die Antriebsvorrichtung bzw. den Energiespeicher gewickelt oder gewunden, dass die Antriebsvorrichtung bzw. der Energiespeicher durch das Seil fest miteinander und mit der Tragestruktur und/oder der Flügelstruktur verbunden sind.

Gemäß einer Ausführungsform bestehen das Seil, der Gurt und das Kabel aus einer hochreisfesten Faser oder Faserverbund. Bevorzugt besteht die Faser aus einer ultraleichten, jedoch hochreisfesten Faser oder Faserverbund. Das Seil, der Gurt bzw. das Kabel bieten hierdurch einen Schutz, wobei gleichzeitig das Gewicht des Seils, des Gurts bzw. des Kabels möglichst gering gehalten werden kann. Vorzugsweise besteht die Faser oder der Faserverbund aus einem Material das insbesondere UV-resistent ist. Vorzugsweise ist das Material auch unempfindlich gegen extrem kalte Temperaturen von ca. - 90 °C, wie sie beispielsweise in großen Höhen, in denen HAPS beispielsweise fliegen vorkommen. Beispielsweise besteht die Sicherungshülle aus einem Polyamid, beispielsweise aus Nylon oder einer Faser oder einem Faserverbund mit vergleichbaren Eigenschaften.

Gemäß einer Ausführungsform kann das Seil, der Gurt bzw. das Kabel beispielsweise derart mit der Sicherungshülle bzw. Schutzhülle, beispielsweise einem Netz, derart verbunden sein, dass das Seil mit dem Netz, beispielsweise mit dem Maschengeflecht des Netzes, verwoben ist oder in das Maschengeflecht des Netzes eingewoben ist, d.h. in den Aufbau des Maschengeflechts des Netzes mit integriert ist.

Erfindungsgemäß hält die Sicherungseinrichtung die Komponenten des Fluggeräts bei einem strukturellen Zusammenbruch des Fluggeräts zusammen. Durch die Sicherungseinrichtung, die die realtiv schweren Komponenten des Fluggeräts mit der Tragestruktur und der Flügelstruktur sowie bevorzugt untereinander verbindet, werden die relativ schweren Komponenten wie insbesondere die Antriebsvorrichtung und der Energiespeicher an die relativ leichten Komponenten des Fluggeräts, wie insbesondere die Tragestruktur und die Flügelstruktur "gebunden". Das Volumen des strukturell zusammengebrochenen Fluggeräts wird insbesondere durch die relativ großflächige Flügelstruktur und die Tragestruktur vergrößert. Durch das relativ große Volumen wird die Fallgeschwindigkeit bei einem Absturz abgebremst und der Schaden beim Aufprall auf dem Erdboden wird minimiert. Im Gegensatz dazu würden die relativ schweren Komponenten des Fluggeräts, wie die Antriebsvorrichtung und der Energiespeicher bei einem alleinigen freien Absturz aufgrund des relativ geringen Volumens im Verhältnis zum Eigengewicht eine sehr hohe Geschwindigkeit erreichen und einen entsprechend großen Schaden anrichten können.

Gemäß einer Ausführungsform ist das Fluggerät ein unbemanntes Ultraleichtflugzeug. Das Fluggerät ist vorzugsweise ein Leicht- oder Ultraleichtflugzeug. Ultraleichtflugzeuge weisen ein geringes Gewicht bei einer relativ großen Spannweite auf. Um ein relativ geringes Gesamtgewicht des Fluggeräts zu erreichen sind die einzelnen Komponenten weitgehend ungeschützt und ohne schützende Verkleidung am Fluggerät angebracht. Die Strukturen des Fluggeräts sind aus Gewichtsgründen meist relativ filigran gehalten. Bei einem starken Unwetter bzw. starken Wetterturbulenzen kann es daher zu Beschädigungen des Fluggeräts kommen, wodurch die Struktur, d.h. im Wesentlichen die Tragestruktur bzw. die Flügelstruktur des Fluggeräts zusammenbricht bzw. stark beschädigt wird. Dabei können die Flugeigenschaften des Fluggeräts verloren gehen bzw. zumindest derart stark gestört werden, dass das Fluggerät abstürzt, d.h. unkontrolliert auf der Erde landet. Hierbei ist es insbesondere bei größeren Flugstrukturen von Vorteil, wenn hierbei möglichst geringe Schäden an der Umwelt entstehen. Durch die Sicherungseinrichtung ist das zuvor beschriebene Fluggerät in der Lage die Struktur des Fluggeräts bei einem Absturz zusammenzuhalten und durch das Volumen des Fluggeräts an sich den Absturz des Fluggeräts zumindest insoweit abzudämpfen, als dass die Absturzgeschwindigkeit verringert wird und ein "sanfter Absturz" erreicht wird. Genauer gesagt werden die relativ schweren Komponenten des Fluggeräts, d.h. die Antriebsvorrichtung und der Energiespeicher, an das eigentliche Fluggerät, d.h. die Tragestruktur und die Flügelstruktur, "gebunden", einfacher gesagt werden die Komponenten des Fluggeräts zusammengehalten.

Gemäß einer Ausführungsform ist das Fluggerät ein Pseudosatellit oder ein sogenannter Pseudolit. Pseudolit ist ein Begriff der sich aus Pseudo und Satellit zusammensetzt. Ein Pseudosatellit ist ein terrestrischer oder terrestrisch naher Sender, der Signale aussendet, die diejenigen eines Satelliten nachahmen. In der vorliegenden Form dient das Fluggerät als terrestrisch naher (im Vergleich zu einem echten Satellit) Sender. Pseudoliten werden zum Beispiel verwendet, um lokal die Messgenauigkeit von satellitengestützten Navigationssystemen, wie z. B. GPS, zu erhöhen. Für einen GPS-Empfänger erscheinen Pseudoliten als zusätzliche Satelliten. Pseudoliten werden auch eingesetzt, um Signale für Satellitenradio in Städten zu verbreiten. Genauer gesagt übernehmen Pseudoliten u.a. Aufgaben die im Allgemeinen von Satelliten ausgeführt werden, haben jedoch den Vorteil, dass die Kosten für einen derartigen Pseudoliten in der Regel um einiges geringer sind als für einen echten Satelliten. Insbesondere entfallen teure Kosten für eine Trägerrakete, die in der Regel notwendig ist, um einen "echten" Satelliten in den Orbit zu befördern. Das vorliegende Fluggerät kann beispielsweise je nach Ausführungsform leicht aus der Hand gestartet werden.

Alternativ kann das Fluggerät auch eine Höhenplattform sein. Höhenplattform (englisch high altitude platform (station), HAP(S)) ist ein Oberbegriff für quasistationäre, unbemannte Flugobjekte in großer Höhe. Eine Höhenplattform kann zur Überwachung (Verkehr, Veranstaltung, Wetter) oder bei entsprechender Höhe sogar für Mobilfunk ohne die von Satelliten bekannte Verzögerung eingesetzt werden.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: eine erste Ausführungsform des Fluggeräts zeigt;
- FIG. 2: eine weitere Ausführungsform des Fluggeräts zeigt; und
- FIG. 3: einen kollabierten Zustand des Fluggeräts aus Fig. 2 zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

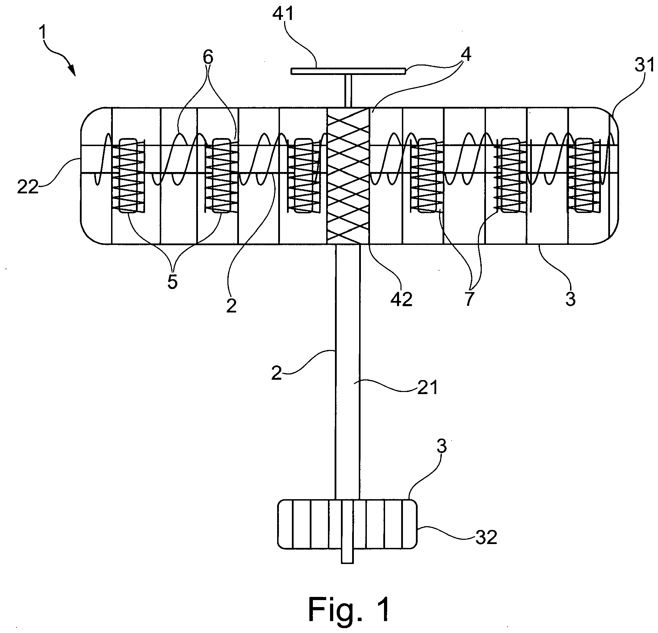

In Figur 1 ist eine erste Ausführungsform des Fluggeräts 1 gezeigt. Das Fluggerät 1 ist aus einer Tragestruktur 2 aufgebaut, die mit einer Flügelstruktur 3 versehen ist. Die Tragestruktur 2 umfasst in der dargestellten Ausführungsform des Fluggeräts 1 einen Rumpf 21 und einen Tragflächenträger 22. Die Flügelstruktur 3 umfasst in der dargestellten Ausführungsform eine Tragfläche 31 und ein Höhenruder 32. An dem Tragflächenträger 22 sind eine Antriebsvorrichtung 4 und mehrere Energiespeicher 5 angeordnet. Die Energiespeicher 5 bestehen beispielsweise aus vorzugsweise aufladbaren Batterien. Aus Gewichtsgründen ist der Energiespeicher 5 auf mehrere Batterien aufgeteilt, die über die Tragfläche 31 verteilt angeordnet sind. Alternativ kann der Energiespeicher 5 auch aus einer einzelnen Batterie bestehen, die aus Gewichtsgründen vorzugsweise zentral, beispielsweise im Bereich des Rumpfs 21 angeordnet ist.

Die Antriebsvorrichtung 4 umfasst in der dargestellten Ausführungsform einen Antrieb 42 mit Motor und beispielsweise einem Getriebe. Der Antrieb 42 treibt einen Propeller 41 an, der zum Vortrieb des Fluggeräts 1 dient. Der Antrieb 42 und die mehreren Energiespeicher 5 sind an dem Tragflächenträger 22 befestigt. Alternativ können die Energiespeicher 5 auch direkt an der Tragfläche 31 befestigt sein und der Antrieb 42 kann direkt an dem Rumpf 21 befestigt sein. Um die Reichweite des Fluggeräts 1 zu erhöhen sind vorzugsweise auf der Oberseite der Tragfläche 31 Solarzellen (nicht dargestellt) aufgebracht. Bei Sonneneinstrahlung werden die Energiespeicher 5 aufgeladen. Der Antrieb 42 besteht vorzugsweise aus einem elektrischen Motor.

Der Antrieb 42 und die Energiespeicher 5 sind mit einer Sicherungseinrichtung 6 untereinander und in der dargestellten Ausführungsform mit der Tragestruktur 2, hier dem Tragflächenträger 21 mechanisch verbunden. Die Sicherungseinrichtung 6 umfasst in der dargestellten Ausführungsform ein Seil, bzw. einen Gurt, und Sicherungshüllen 7 aus einem maschenartigen Netzgewebe. Das Seil bzw. der Gurt und die Sicherungshüllen 7 bestehen vorzugsweise aus einer hochreisfesten ultraleichten Faser oder Faserverbund. Die Energiespeicher 5 und der Antrieb 42 sind in der dargestellten Ausführungsform des Fluggeräts 1 in die Sicherungshüllen 7 eingehüllt. Vorzugsweise umgeben die Sicherungshüllen 7 die Energiespeicher 5 und den Antrieb 42 zumindest derart, dass diese derart in den Sicherungshüllen 7 befestigt sind, dass ein Herausfallen oder Herausrutschen aus den Sicherungshüllen 7 verhindert wird. Das Seil der Sicherungseinrichtung 6 ist in der dargestellten Ausführungsform des Fluggeräts 1 um den Tragflächenträger 22 des Tragestruktur 2 des Fluggeräts 1 gewickelt und mit den Sicherungshüllen 7 mechanisch verbunden. Durch die Sicherungseinrichtung 6 wird verhindert, dass sich die Energiespeicher 5 und der Antrieb 4 bei einem Lösen bzw. einer Beschädigung der eigentlichen Befestigung der Energiespeicher 5 und des Antriebs 4 an der Tragestruktur 2, von dem Fluggerät 1 an sich lösen und herunterfallen. Weiter kann das Fluggerät 1 weitere elektronische und/oder mechanische Komponenten, wie beispielsweise Messgeräte, Sensoren, Kameras, Kommunikationsvorrichtung usw. aufweisen. Die weiteren Komponenten können beispielsweise an dem Rumpf 21 oder an dem Tragflächenträger 22 angebracht sein. Die weiteren Komponenten können ebenfalls mittels der Sicherungseirichtung 6 an der Tragestruktur 2 und/oder der Flügelstruktur 3 des Fluggeräts 1 gesichert sein.

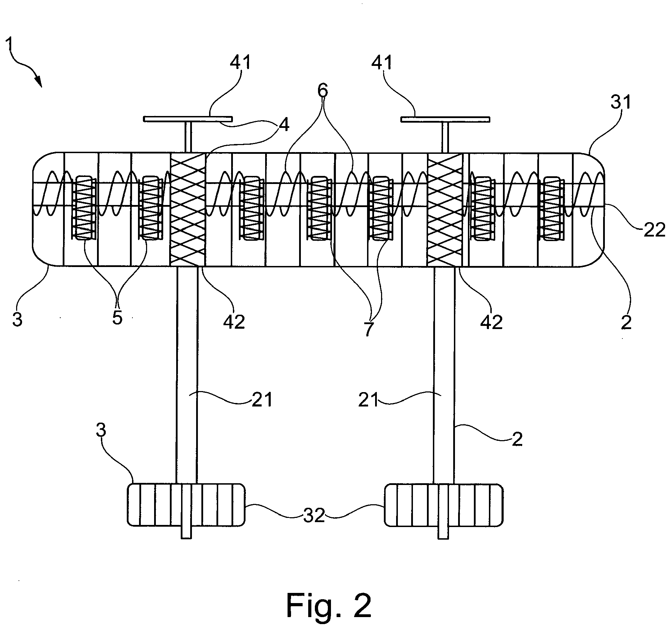

Figur 2 zeigt eine weitere Ausführungsform des Fluggeräts 1. Das in Figur 2 dargestellte Fluggerät 1 weist im Vergleich zu dem in Figur 1 gezeigten Fluggerät einen sogenannten Tandemaufbau mit zwei Rümpfen 21 auf, die über den Tragflächenträger 22 miteinander verbunden sind. Die Tandemstruktur weist in der dargestellten Ausführungsform eine gemeinsame Tragfläche 31 und zwei Höhenruder 32 auf. Die beiden Rümpfe 21 weisen jeweils eine Antriebsvorrichtung 4 auf, die jeweils einen Motor 42 mit einem Propeller 41 umfassen. Zum Antrieb der Motoren 42 weist das Fluggerät 1 mehrere Energiespeicher 5 auf. Die Energiespeicher 5 bestehen vorzugsweise aus aufladbaren Batterien. Um die Reichweite des Fluggeräts 1 zu erhöhen werden die Batterien über Solarzellen (nicht dargestellt) aufgeladen. Die Solarzellen sind beispielsweise auf der Oberseite der Tragfläche 31 angeordnet. Je nach Einsatzzweck des Fluggeräts 1 kann dieses weitere elektronische und/oder mechanische Komponenten, wie beispielsweise Messgeräte, Sensoren, Kameras, Kommunikationsvorrichtung usw. aufweisen.

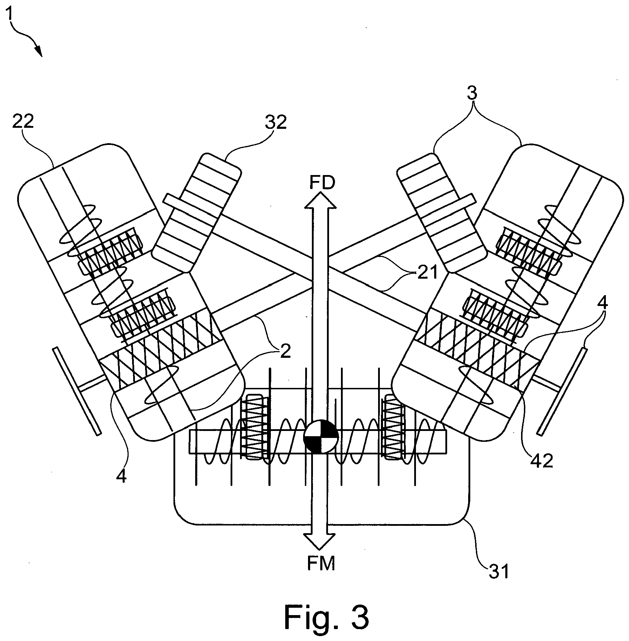

Figur 3 zeigt einen kollabierten Zustand des Fluggeräts 1 aus Figur 2. In der dargestellten Ausführungsform ist das Fluggerät 1 im Bereich zwischen den beiden Rümpfen 21 derart beschädigt worden, dass drei Segmente gebildet wurden. Die einzelnen Segmente bilden in dem dargestellten Fall in etwa die Form eines Federballs. Die schweren, weitgehend in Richtung Mittelachse angeordneten Komponenten bilden einen Schwerpunkt FM. Der Schwerpunkt wird daher beim Absturz das kollabiert Fluggerät 1 in die hier dargestellte Form eines Federballs, oder zumindest in eine vergleichbare Form bringen. Das relativ große Volumen des Fluggeräts 1 im Vergleich zum relativ geringen Gewicht hat den Effekt, dass durch das große das Volumen des Fluggeräts 1 der Luftwiderstand FD stark erhöht wird und das Fluggerät 1 ähnlich wie mit einem Fallschirm oder in der Art eines Fallschirms beim Absturz stark abgebremst wird.

Eine Beschädigung bzw. Zerstörung der eigentlichen Befestigung kann beispielsweise auftreten, wenn das Fluggerät 1 aufgrund eines starken Unwetters selbst beschädigt wird. Gerade bei einem Ultraleichtflugzeug kann, bedingt durch die leicht und filigrane Bauweise, bereits ein vergleichsweise weniger starkes Unwetter das Fluggerät 1 derart beschädigen, dass die Flugeigenschaften in Mitleidenschaft gezogen werden und das Flugzeug unkontrolliert auf der Erde landet. Bei dem hier beschrieben Fluggerät 1 wird durch die Sicherungseinrichtung 6 verhindert, dass sich die relativ schweren Komponenten des Fluggeräts 1, wie die Energiespeicher 5 und der Antrieb 42 vom Rest des Fluggeräts 1 lösen und alleine herunterfallen. Die Energiespeicher 5 und der Antrieb 42 weisen im Vergleich zur Größe ein vergleichsweise hohes Gewicht auf und erreichen beim freien Fall aus sehr hohen Flughöhen, in denen das beschrieben Fluggerät 1 in der Regel fliegt, eine sehr große Fallgeschwindigkeit auf, mit der Folge eines nicht minder geringen Schadenspotential für die Umgebung beim Aufprall. Verbleiben die relativ schweren Komponenten, d.h. die Energiespeicher 5 und der Antrieb 42 beim Absturz zusammen beim Rest des Fluggeräts 1, wird durch das relativ große Volumen des Fluggeräts 1 im Vergleich zum insgesamt geringen Gesamtgewicht des Fluggeräts 1 die zu erreichende Geschwindigkeit beim freien Fall wesentlich gemindert.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn oder den Äquivalenzbereich der Ansprüche fallen, umfasst werden.

### Bezugszeichenliste

- 1: Fluggerät
- 2: Tragestruktur
- 21: Rumpf
- 22: Tragflächenträger
- 3: Flügelstruktur
- 31: Tragfläche
- 32: Höhenruder
- 4: Antriebsvorrichtung
- 41: Antrieb
- 42: Propeller
- 5: Energiespeicher
- 6: Sicherungseinrichtung
- 7: Sicherungshülle

## Patentansprüche

1. Fluggerät (1), aufweisend:
eine Tragestruktur (2) die mindestens einen Rumpf (21) aufweist;
eine Flügelstruktur (3);
wenigstens eine Antriebsvorrichtung (4) die mindestens einen Propeller (41) und einen Antriebsmotor (42) aufweist; und
mindestens einen Energiespeicher (5) zum Bereitstellen von Energie für den Betrieb der Antriebsvorrichtung (4);
**dadurch gekennzeichnet, dass** die mindestens eine Antriebsvorrichtung (4) und der mindestens eine Energiespeicher (5) zusätzlich zu einer eigentlichen Befestigung an der Tragestruktur und/oder der Flügelstruktur mittels einer Sicherungseinrichtung (6) mechanisch mit der Tragestruktur (2) und der Flügelstruktur (3) des Fluggeräts (1) derart verbunden sind, dass die Sicherungseinrichtung (6) die Antriebsvorrichtung (4) und den mindestens einen Energiespeicher (5) bei einem strukturellen Zusammenbruch des Fluggeräts (1) und/oder Lösen der eigentlichen Befestigung als ein relativ großvolumiges Objekt mit einem relativ hohen Luftwiderstand in der Art eines Federballs oder eines Fallschirms zusammenhält.

2. Fluggerät (1) nach Anspruch 1,
wobei die mindestens eine Antriebsvorrichtung (4) und der mindestens eine Energiespeicher (5) und/oder die Tragestruktur (2) und die Flügelstruktur (3) auch jeweils untereinander mittels der Sicherungseinrichtung (6) verbunden sind.

3. Fluggerät nach einem der vorherstehenden Ansprüche,
wobei die Antriebsvorrichtung (4) zumindest teilweise von einer Sicherungshülle (7) umhüllt ist.

4. Fluggerät nach einem der vorherstehenden Ansprüche,
wobei der Energiespeicher (5) zumindest teilweise von einer Sicherungshülle (7) umhüllt ist.

5. Fluggerät nach einem der Ansprüche 3 oder 4,
wobei die Sicherungshülle (7) mit der Sicherungseinrichtung (6) mechanisch verbunden ist.

6. Fluggerät nach einem der Ansprüche 3 bis 5,
wobei die Sicherungshülle (7) ein Netz oder Gewebe ist.

7. Fluggerät nach einem der Ansprüche 3 bis 6,
wobei die Sicherungshülle (7) aus einer hochreisfesten Faser oder Faserverbund besteht.

8. Fluggerät nach einem der vorherstehenden Ansprüche,
wobei die Sicherungseinrichtung (6) mindesteins ein Seil, einen Gurt und/oder ein Kabel aufweist.

9. Fluggerät nach einem der vorherstehenden Ansprüche,
wobei das Seil, der Gurt und/oder das Kabel aus einer hochreisfesten Faser oder Faserverbund bestehen.

10. Fluggerät nach einem der vorherstehenden Ansprüche,
das ein unbemanntes Ultraleichtflugzeug ist.

11. Fluggerät nach einem der vorherstehenden Ansprüche,
das ein Pseudosatellit ist.

## Claims

1. Aircraft (1) having:
a supporting structure (2) which has at least one fuselage (21);
a wing structure (3);
at least one drive apparatus (4) which has at least one propeller (41) and a drive motor (42); and
at least one energy store (5) for providing energy for operation of the drive apparatus (4);
**characterized in that** the at least one drive apparatus (4) and the at least one energy store (5), in addition to an actual fastening to the supporting structure and/or the wing structure, are mechanically connected to the supporting structure (2) and the wing structure (3) of the aircraft (1) by means of a securing device (6) such that the securing device (6) holds the drive apparatus (4) and the at least one energy store (5) together in the event of a structural collapse of the aircraft (1) and/or loosening of the actual fastening as a relatively large-volume object with relatively high air resistance in the manner of a shuttlecock or parachute.

2. Aircraft (1) according to Claim 1, the at least one drive apparatus (4) and the at least one energy store (5), and/or the supporting structure (2) and the wing structure (3) also being connected together in each case by means of the securing device (6).

3. Aircraft according to either of the preceding claims,
the drive apparatus (4) being enclosed at least partially by a securing shroud (7).

4. Aircraft according to one of the preceding claims, the energy store (5) being enclosed at least partially by a securing shroud (7).

5. Aircraft according to either of Claims 3 and 4, the securing shroud (7) being mechanically connected to the securing device (6).

6. Aircraft according to one of Claims 3 to 5, the securing shroud (7) being a net or woven fabric.

7. Aircraft according to one of Claims 3 to 6, the securing shroud (7) consisting of a highly tear-resistant fiber or fiber composite.

8. Aircraft according to one of the preceding claims, the securing device (6) having at least one rope, strap and/or cable.

9. Aircraft according to one of the preceding claims, the rope, the strap and/or the cable consisting of a highly tear-resistant fiber or fiber composite.

10. Aircraft according to one of the preceding claims, which is an unmanned ultralight aircraft.

11. Aircraft according to one of the preceding claims, which is a pseudo-satellite.

## Revendications

1. Appareil volant (1), présentant:
une structure portante (2) qui présente au moins un fuselage (21);
une structure d'ailes (3);
au moins un dispositif de propulsion (4) qui présente au moins une hélice (41) et un moteur d'entraînement (42); et
au moins un accumulateur d'énergie (5) destiné à fournir de l'énergie pour le fonctionnement du dispositif de propulsion (4);
**caractérisé en ce que**
ledit au moins un dispositif de propulsion (4) et ledit au moins un accumulateur d'énergie (5) sont, en plus d'une fixation propre à la structure portante et/ou à la structure des ailes, assemblés mécaniquement au moyen d'un dispositif de fixation (6) à la structure portante (2) et à la structure des ailes (3) de l'appareil volant (1) de telle manière que le dispositif de fixation (6) maintienne ensemble le dispositif de propulsion (4) et ledit au moins un accumulateur d'énergie (5), en cas de ruine structurelle de l'appareil volant (1) et/ou de séparation de la fixation propre, sous la forme d'un objet de volume relativement grand avec une résistance à l'air relativement élevée à la manière d'un volant de badminton ou d'un parachute.

2. Appareil volant (1) selon la revendication 1, dans lequel ledit au moins un dispositif de propulsion (4) et ledit au moins un accumulateur d'énergie (5) et/ou la structure portante (2) et la structure des ailes (3) sont également assemblés respectivement les uns aux autres au moyen du dispositif de fixation (6).

3. Appareil volant selon l'une quelconque des revendications précédentes, dans lequel le dispositif de propulsion (4) est enveloppé au moins en partie par une housse de fixation (7).

4. Appareil volant selon l'une quelconque des revendications précédentes, dans lequel l'accumulateur d'énergie (5) est enveloppé au moins en partie par une housse de fixation (7).

5. Appareil volant selon une des revendications 3 ou 4, dans lequel la housse de fixation (7) est reliée mécaniquement au dispositif de fixation (6).

6. Appareil volant selon l'une quelconque des revendications 3 à 5, dans lequel la housse de fixation (7) est un filet ou un tissu.

7. Appareil volant selon l'une quelconque des revendications 3 à 6, dans lequel la housse de fixation (7) se compose de fibre ou d'un composite de fibre à haute résistance à la rupture.

8. Appareil volant selon l'une quelconque des revendications précédentes, dans lequel le dispositif de fixation (6) présente au moins un cordage, une sangle et/ou un câble.

9. Appareil volant selon l'une quelconque des revendications précédentes, dans lequel le cordage, la sangle et/ou le câble se composent d'une fibre ou d'un composite de fibre à haute résistance à la rupture.

10. Appareil volant selon l'une quelconque des revendications précédentes, qui est un avion ultraléger sans équipage.

11. Appareil volant selon l'une quelconque des revendications précédentes, qui est un pseudo-satellite.
